Europäisches Patentamt

European Patent Office

Office européen des brevets

(19)

(11) Publication number: **0 300 122 B1**

# EUROPEAN PATENT SPECIFICATION

(12)

(45) Date of publication of patent specification: **18.12.91**   (51) Int. Cl.⁵: **B65G 47/54**

(21) Application number: **88102870.8**

(22) Date of filing: **26.02.88**

(54) **Right angle flow-through jump transfer conveyor system.**

(30) Priority: **15.07.87 US 76183**
**07.12.87 US 129189**

(43) Date of publication of application:
**25.01.89 Bulletin 89/04**

(45) Publication of the grant of the patent:
**18.12.91 Bulletin 91/51**

(84) Designated Contracting States:
**DE FR GB IT**

(56) References cited:
**US-A- 3 087 597**
**US-A- 3 938 646**

(73) Proprietor: **AMERICAN BOTTLERS EQUIPMENT CO. INC.**
**10330 South Dolfield Road**
**Owings Mills Maryland 21117(US)**

(72) Inventor: **Fauth Frederick E., Sr.**
**28 Allegheny Avenue, Apt. 2603**
**Towson, Maryland 21204(US)**
Inventor: **Barkley Paul E.**
**5910 Forest Court**
**Sykesville, Maryland 21784(US)**

(74) Representative: **Schlagwein, Udo, Dipl.-Ing.**
**Anwaltsbüro Ruppert & Schlagwein Frankfurter Strasse 34**
**W-6350 Bad Nauheim(DE)**

Rank Xerox (UK) Business Services

## Description

### 1. Field of the Invention

This invention relates to a transfer mechanism and, more particularly, this invention relates to a conveyor right angle transfer mechanism having a plurality of "pop-up" tensioning strips and rails for re-directing the flow of articles on the conveyor. The tensioning strips which are operated by opposing end pulleys are raised while the rails are sequentially raised or lowered for transporting articles in a right angle direction responsive to the condition of the flow of articles along various portions of the conveyor. The flow-through jump transfer system of the present invention is efficient, economical, simply constructed and easily installed.

### 2. Description of the Relevant Art

U.S. Patent No. 4,541,520 issued to F.S. Greenlee on September 17, 1985 teaches the vertical movements of the belts by drive sheaves mounted on a common base. The drive sheaves raise the pulleys which support the belts. However, the Greenlee patent lacks the separate raising or tensioning of the belt above the rollers.

U.S. Patent No. 3,822,777 issued to J.T. Jepsen on July 9, 1974 teaches the tensioning of a band or belt while keeping the end pulleys at their original positions. The tensioning of the belt is accomplished not by a "pop-up" type support member, but by rotatable pulleys which are raised by piston cylinders. However, the Jepsen patent is not even concerned with the use of a tensioned band between conveyor rollers.

U.S. Patent No. 3,087,597 issued to O.G. Jeddeloh on August 22, 1960 teaches an unloading device for a multideck conveyor employing belts which are guided over roller-equipped rails and raised by pivotable links.

### SUMMARY OF THE INVENTION

With the foregoing background of this invention in mind, and as the following description of this invention proceeds it will be appreciated that the primary object of the present invention is to provide a right angle flow-through jump transfer mechanism for a conveyor.

It is another primary object of this invention to provide a right angle flow-through jump transfer mechanism for a conveyor which has a plurality of "pop-up" tensioning strips operably disposed between a plurality of rollers in combination with "pop-up" rails which sequentially operate at opposing sides of the transfer mechanism.

It is a further object of this invention to provide a right angle flow-through jump transfer mechanism for a conveyor which can be rapidly and easily installed in a conveyor system.

It is still another object of this invention to provide a right angle flow-through jump transfer mechanism for a conveyor which receives articles to be transferred at a predetermined parameter relative to the flow of the articles along the conveyor.

The right angle flow-through jump transfer conveyor mechanism of the present invention is used for diverting the flow of articles along a conveyor in a direction at right angles to the flow. The transfer mechanism comprises a plurality of tensioning strips seated on lubricated support members which are raised or lowered and operate in sequence with "pop-up" rails that selectively allow or block off entry of the articles to the transfer mechanism. The flow of the article is monitored by a plurality of sensors with a programmable controller placed along the jump transfer and the conveyor for sequentially operating the strips and rails responsive to the condition of the flow of articles along various portions of the conveyor.

### BRIEF DESCRIPTION OF THE DRAWINGS

Figure 1 is a perspective view of a right angle flow-through jump transfer according to the present invention, including an illustration of an associated conveyor operably joined thereto;

Figure 2 is a partial diagrammatic top view of the right angle flow-through jump transfer of Figure 1, including a schematic view of associated sensors operably coupled to a programmable controller;

Figure 3 is a perspective view showing at least one "pop-up" rail coupled to an actuator cylinder with an adjoining brace member;

Figure 4 is a partial cross-sectional view taken along lines 4-4 of Figure 1 showing the manner in which the actuator cylinders raise or lower the tensioning strips and rails;

Figures 5a and 5b are partial diagrammatic views respectively showing the raised and lowered positions of a tensioning strip relative to adjoining rollers;

Figure 6 is a schematic view of the actuator cylinders of the rails operably connected to dual air-line members coupled to an air supply; and

Figure 7 is a side view showing the manner in which a series of rollers interposed between the strips are driven.

### DESCRIPTION OF THE PREFERRED EMBODIMENTS

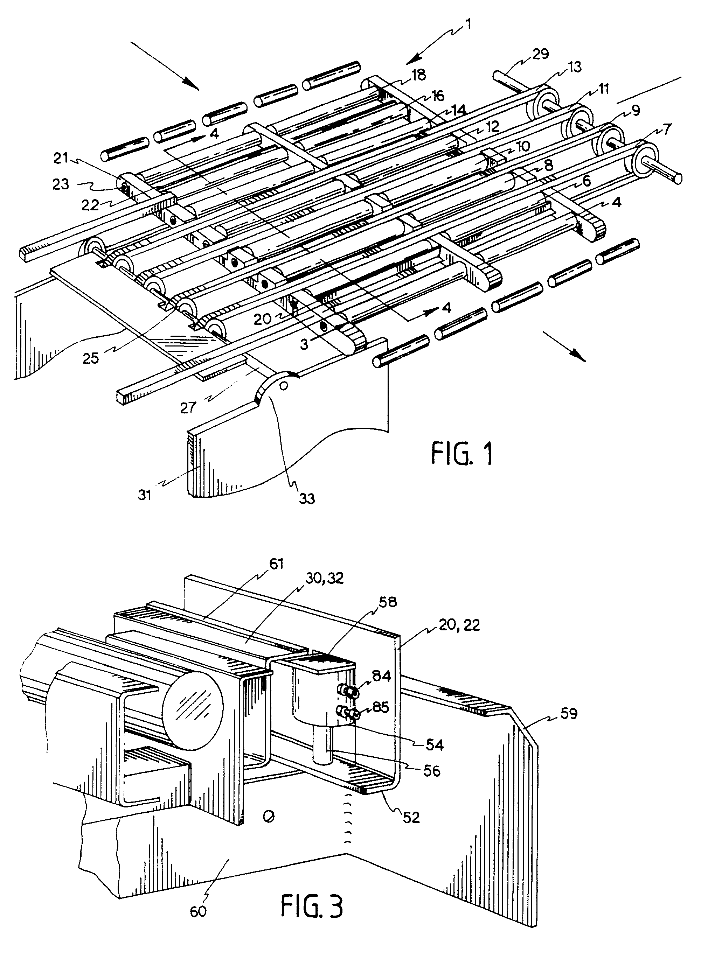

Attention is first directed to Figure 1 which shows a right angle flow-through jump transfer of the present invention, generally referred to by reference number 1. The jump transfer 1 has rollers 4, 6, 8, 10, 12, 14, 16 and 18. Interposed between rollers 6, 8, 10, 12 and 14 are V-shaped belts or tensioning strips 7, 9, 11 and 13. Between rollers 4 and 6 is rail 20 while rail 22 is positioned between rollers 16 and 18.

Roller 18 is preferably a low pressure type roller; i.e., when the rail 22 is raised, the low pressure roller 18 stops rotating as a result of the weight of the article thereon. Thus, articles accumulate without damage to the articles. All the rollers are preferably mounted on self-aligning bearing blocks 21 with bronze bushings 23.

The tensioning strips are operably mounted on pulleys 25 which are in turn mounted on shafts 27, 29 on opposing ends thereof. The shafts 27, 29 are mounted on a base 31 having bearing block 33, preferably having a bronze bushing. Shaft 29 is preferably free-wheeling, while one end of shaft 27 is preferably coupled to a conventional drive mechanism (not shown) for turning pulleys 25. The pulleys 25 consequently rotate the strips for carrying articles in the direction of arrow 35 while the strips are in the raised position.

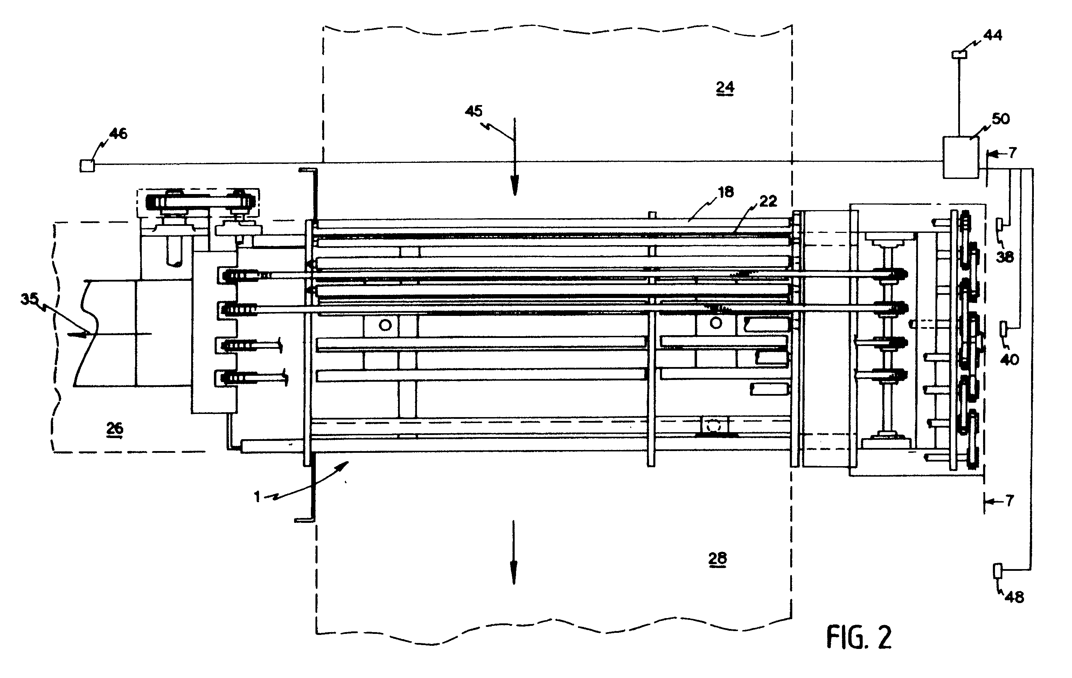

In Figure 2, an input portion 24 of the conveyor is provided for moving articles in the direction towards the flow-through jump transfer 1 while output portions 26 and 28 are alternative output portions for directing flows out of the jump transfer 1. The path taken out of the jump transfer 1, i.e., either output portion 26 or 28, is determined by the condition of the flow of articles along various portions of the conveyor which will later be discussed. Preferably the ratio between the article velocity on conveyor portions 24, 28 and the article velocity along the rollers is 1:2. Thus, in order to have a smooth transition for the travelling articles between the jump transfer 1 and the conveyor portions 24 and 28, relatively wide gaps between rollers 4 and 6, as well as between rollers 14, 16 and 18 are provided.

Alongside the jump transfer 1 and preferably disposed between rail 22 and roller 18 is an article sensor 38. Between rails 20 and 22 is disposed an article sensor 40 which is preferably a reflector-type capable of sensing across opposing angles defined by the rectangular configuration of the jump transfer 1.

Article sensors 44, 46 and 48 are located near conveyor portions 24, 26 and 28, respectively. Sensors 38, 40, 44, 46 and 48 are connected to a programmable controller (PC) 50.

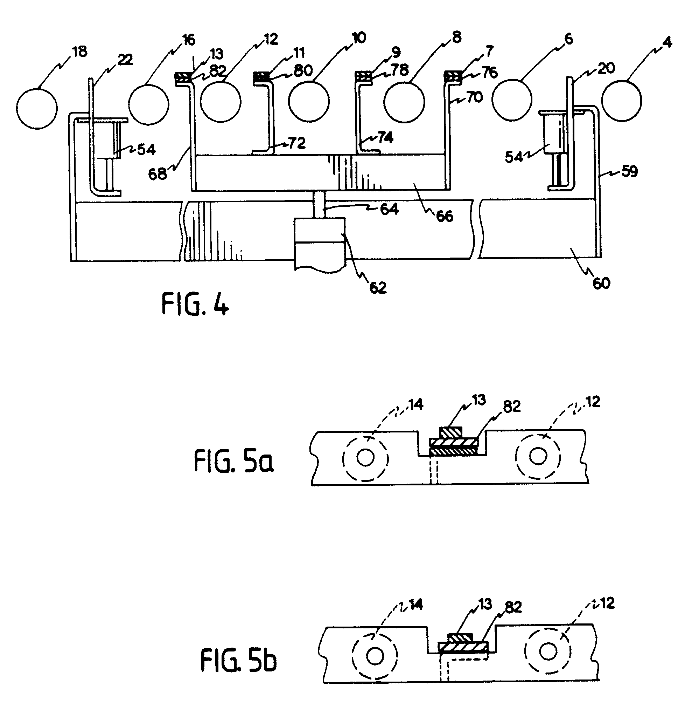

As shown in Figure 3, abutting rail 20 or 22 is brace member 30 or 32. Each of rails 20, 22, preferably has an L-shaped configuration having the bottom portion 52 coupled to at least one actuator cylinder 54 with a plunger 56 which protrudes downward. The actuator cylinder 54 is attached to a frame portion 58 connected to side frame 59.

Figure 3 further illustrates either brace member 30 or 32 coupled to lower frame 60 which is in turn connected to side frame 59. Each brace member 30, 32 has a channel-shaped plastic sleeve 61 coupled thereto to prevent abrasions occurring on the rails 20, 22.

In Figure 4, another actuator cylinder 62 is coupled to the lower frame 60. Attached to the plunger 64 of the actuator cylinder 62 is a horizontal support member 66 having inverted L-shaped members 68 and 70 attached thereto for supporting tensioning strips 7 and 13, respectively. Coupled above the intermediate portion of the horizontal support member 66 are C-shaped members 72, 74 for supporting tensioning strips 9 and 11. Mounted between the tensioning strips 7, 9, 11 and 13 and the members 68, 70, 72 and 74, are lubricated members 76, 78, 80 and 82, respectively. The lubricated members 76, 78, 80 and 82 are manufactured by, for example, Nolu-S Company of Pennsylvania. The side surfaces of the edges of the lubricated members 76, 78, 80 and 82 which abut the strips 7, 9, 11 and 13 are preferably chamfered for providing relaxation to the sloping portions of the strips directly abutting the end pulleys (not shown).

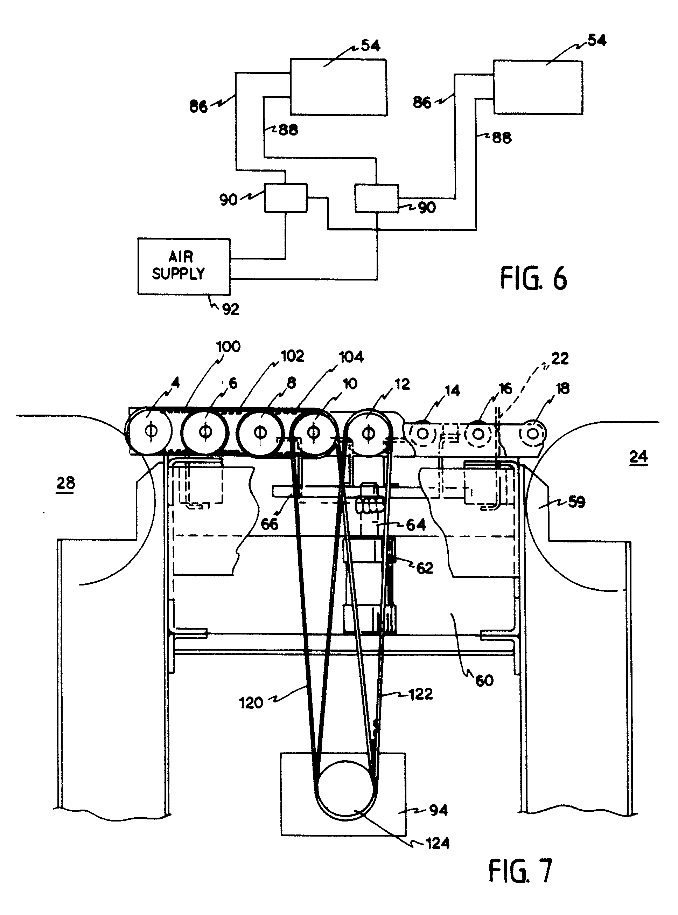

As shown in Figure 5a, when the tensioning strip 13, for example, is raised, its upper surface is above the top surfaces of the adjoining rollers 12 and 14, thereby allowing the articles being transported to be carried along by the strips. When the tensioning strip 13 is lowered, as illustrated in Figure 5b, its upper surface is below the top surfaces of the adjoining rollers 12 and 14 which consequently permit the rollers 12 and 14 to transport the articles.

In Figure 6, a schematic view of the actuator cylinders 54 for operating the rails 20, 22 is shown. Each rail 20 or 22 has at least two cylinders 54 at opposing ends thereof (see, Figure 3 showing one end of rail 20). Cylinders 54 are double acting actuator cylinders having inlet 84 and outlet 85 (see, Figure 3) which connect to inlet 86 and outlet 88 lines. The inlet line 86 and outlet line 88 are coupled to dual air-line members 90 which, in turn, are coupled to an air supply 92. The double acting actuator cylinders 54 are coupled to 4-way solenoid valves (not shown) which, in turn, are joined to the PC 50.

The PC 50 is programmed to detect by means of article sensor 44 the accumulation of articles flowing towards the jump transfer 1. When sensor 38 detects articles, rail 22 is lowered. When sensor 40 detects articles on the strips 7, 9, 11, 13, rail 20 is raised. The PC 50 is programmed for a time delay between the lowering of rail 22 by cylinders 54 and the raising of the strips 7, 9, 11, 13 by cylinder 62 in order for articles to be transported to the conveyor portion 26 located perpendicular to conveyor portion 24.

Initially, the flow of articles is from conveyor portion 24 to conveyor portion 26, as shown by arrows 35, 45.

When sensor 46 detects an accumulation of articles along conveyor portion 26, the flow of articles is generally directed to conveyor portion 28. That is, the strips 7, 9, 11, 13 and rail 20 are lowered as shown in Figure 5b, in order to permit the rollers 4, 6, 8, 10, 12, 14, 16, 18 to transport the articles to the conveyor portion 28.

Similarly, if the initial flow of articles is from conveyor portion 24 to conveyor portion 28, as shown by arrow 45, sensor 44 can detect accumulation of articles on conveyor portion 24. Once accumulation of articles is detected by sensor 44, the strips and rail 20 are raised, thereby diverting the flow of the articles toward conveyor portion 26, as shown by arrow 35.

Shown in Figure 7 is a schematic view of the manner in which the rollers 4, 6, 8, 10, 13, 14, 16, 18 are driven by motor 94. Joined to roller 6 are belts 100 and 102 for operably coupling to rollers 4 and 8, respectively. Belt 102 similarly couples roller 6 to roller 8, while belt 104 joins roller 8 to roller 10. A belt (not shown) couples roller 10 to roller 12, while another belt (not shown) joins roller 12 to roller 14. Rollers 14 and 16 are joined by still another belt (not shown), while rollers 16 and 18 are coupled by yet another belt (not shown). Joined to pulley 124 of motor 94 are rollers 10 and 12 by belts 120 and 122, respectively. The aforementioned arrangement provides for a compact series of rollers effectively driven by a single motor 94. Although the belts have been referred to as being joined to the rollers, it should be understood that the belts are joined to pulleys which are coupled to the rollers.

The invention has been particularly illustrated as being a jump transfer capable of diverting articles along conveyor portions 26 and 28. It should be understood that the invention can also function with the above-described jump transfer in conjunction with another jump transfer mechanism solely for diverting the articles at a right angle direction at the end flow of conveyor portion 28.

While the invention has been particularly shown and described in reference to preferred embodiments thereof, it will be understood by those skilled in the art that changes in form and details may be made therein without departing from the spirit and scope of the invention.

## Claims

1. A right angle jump transfer (1) for a conveyor system having a plurality of parallel rollers (4, 6, 8, 10, 12, 14, 16, 18) disposed in a planar array, comprising:

   (A) a plurality of flexible strips (7, 9, 11, 13) supported by first support member (66) means for tensioning, raising and lowering said strips (7, 9, 11, 13), and wherein said strips (7, 9, 11, 13) are interposed between said rollers (4, 6, 8, 10, 12, 14, 16, 18;

   (B) at least one rail means (20, 22) located proximate an edge of said right angle transfer (1) supported by at least one first actuator cylinder (54) for raising and lowering said rail means (20, 22) in sequence with said strips (7, 9, 11, 13);

   (C) first driving means (94) for driving said plurality of rollers (4, 6, 8, 10, 12, 14, 16, 18);

   (D) second driving means for driving said plurality of strips (7, 9, 11, 13); and

   (E) first sensing means (44) for detecting a predetermined parameter in the flow of articles on said right angle jump transfer (1).

2. A right angle jump transfer (1) as defined in Claim 1, wherein each of said plurality of strips (7, 9, 11, 13) is operably joined to end pulleys (25) coupled to said second driving means.

3. A right angle jump transfer (1) as defined in Claim 2, wherein said first support member (66) means comprises:

   (a) solid lubricant strip means (76, 78, 80, 82) for directly seating said strips (7, 9, 11, 13) thereon;

   (b) shaped members (68, 70, 72, 74) directly mounted below said lubricant strip means (76, 78, 80, 82) ; and

   (c) a second actuator cylinder (62) for moving the shaped members (68, 70, 72, 74) upwards or downward.

4. A right angle jump transfer (1) as defined in Claim 3, wherein said first sensing means (44) is for activating the first and second actuator cylinders (54, 62).

5. A right angle jump transfer (1) as defined in Claim 1, further comprising:

   (a) an inlet conveyor portion (24) which directs articles towards said right angle jump transfer (1), and

   (b) first and second outlet conveyor portions (26, 28) which direct articles away from said right angle jump transfer (1).

6. A right angle jump transfer (1) as defined in Claim 5, wherein said first sensing means comprises:

(a) a first sensor (38) located between said jump transfer (1) and said inlet conveyor portion (24); and

(b) a second sensor (40) suitable for detecting the presence of articles on the entire area covered by said right angle jump transfer (1).

7. A right angle jump transfer (1) as defined in Claim 6, further comprising second sensing means (46, 48) located along the inlet of first and second conveyor portions (26, 28) for detecting a predetermined parameter in the flow of articles thereon.

8. A right angle jump transfer (1) as defined in Claim 7, wherein first and second actuator cylinders (54, 62) and said first and second sensing means (38, 40; 46, 48) are operably coupled to a programmable controller means (50) for sequentially raising and lowering the plurality of strips (7, 9, 11, 13) and rail means (20, 22) with a predetermined parameter in the flow of articles.

9. A right angle jump transfer (1) as defined in Claim 8, wherein said rail means (20, 22) comprises:

a first rail (20) between said inlet conveyor portion (24) and said right angle jump transfer (1); and a

second rail (22) between said right angle jump transfer (1) and said outlet conveyor portion (28).

10. A right angle jump transfer (1) as defined in Claim 9, wherein said first rail (20) and said second actuator cylinder (62) are activated at a time delay by said programmable controller (50).

11. A right angle jump transfer (1) as defined in Claim 2, wherein said end pulleys (25) are operably connected to shafts (27, 29), wherein at least one of said shafts (27) is rotated by said second driving means.

12. A right angle jump transfer (1) as defined in Claim 11, wherein said shafts (27, 29) are operably mounted on a base (31) having a bearing block (33) with a bushing.

**Revendications**

1. Dispositif de transfert à renvoi à angle droit (1) pour un système de transport comprenant une pluralité de rouleaux parallèles (4,6,8,10,12,14,16,18) disposés en une série plane, qui comprend :

(A) une pluralité de courroies souples (7,9,11,13) supportées par des premiers supports (66) prévus pour la mise en tension, la montée et la descente desdites courroies (7,9,11,13), lesdites courroies (7,9,11,13) étant interposées entre lesdits rouleaux (4,6,8,10,12,14,16,18) ;

(B) au moins une structure de rails (20,22) placée près d'un bord dudit dispositif de transfert à angle droit (1) et supportée par au moins un premier cylindre d'actionneur (54) pour la montée et la descente de ladite structure de rails (20,22) en séquence avec les dites courroies (7,9,11,13) ;

(C) des premiers moyens d'entraînement (94) pour entraîner ladite pluralité de rouleaux (4,6,8,10,12,14,16,18) ;

(D) des deuxièmes moyens d'entraînement pour entraîner ladite pluralité de courroies (7,9,11,13) ; et

(E) des premiers moyens de détection (44) pour détecter un paramètre prédéterminé dans le flux d'articles sur ledit dispositif de transfert à renvoi à angle droit (1).

2. Dispositif de transfert à renvoi à angle droit (1) suivant la revendication 1, dans lequel chacune de ladite pluralité de courroies (7,9,11,13) est fonctionnellement associée à des poulies d'extrémité (25) accouplées auxdits deuxièmes moyens d'entraînement.

3. Dispositif de transfert à renvoi à angle droit (1) suivant la revendication 2, dans lequel lesdits premiers supports (66) comprennent :

(a) des bandes lubrifiantes rigides (76,78,80, 82) sur lesquelles reposent directement lesdites courroies (7,9,11,13) ;

(b) des profilés (68,70,72,74) directement montés sous lesdites bandes lubrifiantes (76,78,80,82) ; et

(c) un deuxième cylindre d'actionneur (62) pour déplacer les profilés (68,70,72,74) vers le haut ou le bas.

4. Dispositif de transfert à renvoi à angle droit (1) suivant la revendication 3, dans lequel lesdits premiers moyens de détection (44) sont prévus pour activer les premier et deuxième cylindres d'actionneurs (54,62).

5. Dispositif de transfert à renvoi à angle droit (1) suivant la revendication 1, comprenant en outre :

(a) une partie de convoyeur d'entrée (24) qui dirige les articles vers ledit dispositif de transfert à renvoi à angle droit (1), et

(b) une première et une deuxième parties de convoyeur de sortie (26,28) qui évacuent les articles du dit dispositif de transfert à renvoi à angle droit (1).

6. Dispositif de transfert à renvoi à angle droit (1) suivant la revendication 5, dans lequel lesdits premiers moyens de détection comprennent :

(a) un premier capteur (38) placé entre ledit dispositif de transfert (1) et ladite partie de convoyeur d'entrée (24) ; et

(b) un deuxième capteur (40) capable de détecter la présence d'articles sur toute la surface couverte par ledit dispositif de transfert à renvoi à angle droit (1).

7. Dispositif de transfert à renvoi à angle droit (1) suivant la revendication 6, comprenant en outre des deuxièmes moyens de détection (46,48) placés le long de l'entrée des première et deuxième parties de convoyeur (26,28) pour détecter un paramètre prédéterminé du flux d'articles sur ces parties.

8. Dispositif de transfert à renvoi à angle droit (1) suivant la revendication 7, dans lequel les premier et deuxième cylindres d'actionneurs (54,62) et lesdits premiers et deuxièmes moyens de détection (38,40; 46,48) sont fonctionnellement reliés à des moyens de commande programmables (50) pour faire monter et descendre séquentiellement la pluralité de courroies (7,9,11,13) et la structure de rails (20,22) en fonction d'un paramètre prédéterminé du flux d'articles.

9. Dispositif de transfert à renvoi à angle droit (1) suivant la revendication 8, dans lequel ladite structure de rails (20,22) comprend :

un premier rail (20) entre ladite partie de convoyeur d'entrée (24) et ledit dispositif de transfert à renvoi à angle droit (1) ; et

un deuxième rail (22) entre ledit dispositif de transfert à renvoi à angle droit (1) et ladite partie de convoyeur de sortie (28).

10. Dispositif de transfert à renvoi à angle droit (1) suivant la revendication 9, dans lequel ledit premier rail (20) et ledit deuxième cylindre d'actionneur (62) sont activés avec une temporisation par lesdits moyens de commande programmables (50).

11. Dispositif de transfert à renvoi à angle droit (1) suivant la revendication 2,dans lequel lesdites poulies d'extrémité (25) sont fonctionnellement reliées à des arbres (27,29), au moins un desdits arbres (27) étant mis en rotation par lesdits deuxièmes moyens d'entraînement.

12. Dispositif de transfert à renvoi à angle droit (1) suivant la revendication 11, dans lequel les dits arbres (27,29) sont fonctionnellement montés sur une base (31) comportant un bloc de palier (33) avec un coussinet.

**Patentansprüche**

1. Diskontinuierlich arbeitende Übergabevorrichtung (1) für Fördersysteme mit Durchfluß in Querrichtung, welche eine Vielzahl von parallelen, in einer Ebene hintereinander angeordneten Walzen (4, 6, 8, 10, 12, 14, 16, 18) hat und folgendes aufweist:

(A) eine Vielzahl elastischer Bänder (7, 9, 11, 13), welche zum Spannen, Anheben und Absenken der genannten Bänder (7, 9, 11, 13) von einem ersten Tragkörpermittel (66) gehalten sind und bei der die genannten Bänder (7, 9, 11, 13) zwischen den genannten Walzen (4, 6, 8, 10, 12, 14, 16, 18) angeordnet sind;

(B) zumindest einen Querträger (20, 22), welcher in der Nähe eines Randes der genannten, in Querrichtung arbeitenden Übergabevorrichtung angeordnet und zum Anheben und Absenken der genannten Querträger (20, 22) im Arbeitsablauf mit den genannten Bändern (7, 9, 11, 13) von zumindest einem ersten Betätigungszylinder (54) getragen wird;

(C) ein erstes Antriebsmittel (94) zum Antrieb der genannten Vielzahl von Walzen (4, 6, 8, 10, 12, 14, 16, 18);

(D) ein zweites Antriebsmittel zum Antrieb der genannten Vielzahl von Bändern (7, 9, 11, 13); und

(E) eine erste Überwachungseinrichtung (44) zum Überwachen eines vorbestimmten Parameters des Flusses der Artikel auf der genannten, in Querrichtung arbeitenden Übergabevorrichtung (1).

2. Diskontinuierlich arbeitende Übergabevorrichtung (1) mit Durchfluß in Querrichtung nach Anspruch 1, bei der jede der genannten Vielzahl von Bändern (7, 9, 11, 13) über jeweils eine mit dem zweiten Antriebsmittel gekuppelte Umlenk-Riemenscheibe (25) geführt ist.

3. Diskontinuierlich arbeitende Übergabevorrichtung (1) mit Durchfluß in Querrichtung nach Anspruch 2, bei der das genannte erste Tragkörpermittel (66) folgendes aufweist:

(a) feste Gleitbänder (76, 78, 80, 82), um darauf die genannten Bänder (7, 9, 11, 13) direkt zu lagern;

(b) direkt unterhalb der genannten Gleitbänder (76, 78, 80, 82) angeordnete profilierte Elemente (68, 70, 72, 74); und

(c) einen zweiten Betätigungszylinder (62) zum Bewegen der profilierten Elemente (68, 70, 72, 74) aufwärts und abwärts.

4. Diskontinuierlich arbeitende Übergabevorrichtung (1) mit Durchfluß in Querrichtung nach Anspruch 3, bei der die genannte erste Überwachungseinrichtung (44) zum Aktivieren des ersten und zweiten Betätigungszylinders (54, 62) vorgesehen ist.

5. Diskontinuierlich arbeitende Übergabevorrichtung (1) mit Durchfluß in Querrichtung nach Anspruch 1, welche weiterhin folgendes aufweist:

(a) einen Einlaß-Förderbereich (24), welcher Artikel zu der genannten, diskontinuierlich arbeitenden Übergabevorrichtung (1) mit Durchfluß in Querrichtung lenkt und

(b) erste und zweite Auslaß-Förderbereiche (26, 28), welche Artikel von der genannten, diskontinuierlich arbeitenden Übergabevorrichtung (1) mit Durchfluß in Querrichtung abführen.

6. Diskontinuierlich arbeitende Übergabevorrichtung (1) mit Durchfluß in Querrichtung nach Anspruch 5, bei der die genannte erste Überwachungseinrichtung folgendes aufweist:

(a) einen ersten Sensor (38), welcher zwischen der genannten Übergabevorrichtung (1) und dem genannten EinlaßFörderbereich (24) angeordnet ist; und

(b) einen zweiten Sensor (40), welcher zum Überwachen der Anwesenheit von Artikeln auf der gesamten Fläche ausgebildet ist, welche von der genannten Übergabevorrichtung (1) mit Durchfluß in Querrichtung eingenommen wird.

7. Diskontinuierlich arbeitende Übergabevorrichtung (1) mit Durchfluß in Querrichtung nach Anspruch 6, welche weiterhin zweite Überwachungseinrichtungen (46, 48) aufweist, die entlang des Einlasses der ersten und zweiten Förderbereiche (26, 28) angeordnet sind, um darauf den vorbestimmten Parameter des Artikelflusses zu überwachen.

8. Diskontinuierlich arbeitende Übergabevorrichtung (1) mit Durchfluß in Querrichtung nach Anspruch 7, bei der die ersten und zweiten Betätigungszylinder (54, 62) und die genannten ersten und zweiten Überwachungseinrichtungen (38, 40; 46, 48) arbeitsmäßig mit einer programmierbaren Steuereinrichtung (50) verbunden sind, um aufeinanderfolgend die Vielzahl von Bändern (7, 9, 11, 13) und Querträger (20, 22) in Abhängigkeit eines vorherbestimmten Parameters des Flusses der Artikel anzuheben oder abzusenken.

9. Diskontinuierlich arbeitende Übergabevorrichtung (1) mit Durchfluß in Querrichtung nach Anspruch 8, bei der die genannten Querträger (20, 22) eine erste Schiene (20) zwischen dem genannten Einlaß-Förderbereich (24) und der genannten, diskontinuierlich arbeitenden Übergabevorrichtung (1) mit Durchfluß in Querrichtung und eine zweite Schiene (22) zwischen der genannten, diskontinuierlich arbeitenden Übergabevorrichtung (1) mit Durchfluß in Querrichtung und dem genannten Auslaß-Förderbereich (28) aufweisen.

10. Diskontinuierlich arbeitende Übergabevorrichtung (1) mit Durchfluß in Querrichtung nach Anspruch 9, bei der die genannte erste Schiene (20) und der genannte zweite Betätigungszylinder (62) von der genannten programmierbaren Steuereinrichtung (50) mit einer Zeitverzögerung aktivierbar sind.

11. Diskontinuierlich arbeitende Übergabevorrichtung (1) mit Durchfluß in Querrichtung nach Anspruch 2, bei der die Umlenk-Riemenscheiben (25) wirkungsmäßig mit Wellen (27, 29) verbunden sind, wobei zumindest eine der genannten Wellen (27) von dem genannten zweiten Antriebsmittel angetrieben ist.

12. Diskontinuierlich arbeitende Übergabevorrichtung (1) mit Durchfluß in Querrichtung nach Anspruch 11, bei der die genannten Wellen (27, 29) zum Arbeiten auf einem Unterteil (31) befestigt sind, welches einen Lagerblock (33) mit einer Buchse aufweist.

FIG. 1

FIG. 3

FIG. 2

FIG. 4

FIG. 5a

FIG. 5b

FIG. 6

FIG. 7